# EUROPEAN PATENT SPECIFICATION

(11) **EP 2 143 905 B1**
(45) Date of publication and mention of the grant of the patent: **21.10.2015**
(21) Application number: 09162268.8
(22) Date of filing: 09.06.2009
(51) Int. Cl.: F02B 37/00, F02B 37/007, F02B 37/013, F02B 37/18, F02C 9/18, F02D 9/04, F02M 25/07, F02C 6/12, F16K 11/052, F01D 17/14

(54) **Valve regulation assembly**
Ventilregelungsbaugruppe
Ensemble de régulation de soupape

(30) Priority: 07.07.2008 US 217596
(43) Date of publication of application: 13.01.2010
(73) Proprietor: BorgWarner Inc., Auburn Hills, MI 48326 (US)
(72) Inventor: Grissom, Thomas A., Dexter, MI 48130 (US); Busato, Murray, Clinton Township, 48035 MI (US); Telep, Robert J., Livonia, 48154 MI (US)
(74) Representative: Hoefer & Partner Patentanwälte mbB

(56) References cited:
- EP-A1- 0 837 227
- WO-A1-2006/076938
- WO-A1-2006/121745
- WO-A1-2007/147513
- FR-A1- 2 701 292
- FR-A1- 2 917 801
- JP-A- 7 224 633
- US-A- 3 521 659

## Description

### FIELD OF THE INVENTION

The present invention relates to a control valve for a motor vehicle, more specifically, a bypass valve assembly to selectively direct a fluid medium flow, according to the preamble part of claim 1, and a method according to the preamble part of claim 8. Such a valve and method are known from WO 2006/121 745 A1 or EP 0 837 227 A1.

### BACKGROUND OF THE INVENTION

Two-stage turbochargers are commonly known and are used in all kinds of engines. They consist of a high-pressure (HP) turbine, and a low-pressure (LP) turbine, with each turbine having its own compressor. The HP turbine is typically smaller than the LP turbine, and rotates at faster speeds. During normal operating conditions, when the engine runs at lower speeds, (such as at a stop light), the only turbine in use is the HP turbine. When the engine is running at lower speeds, it creates less exhaust gas energy. This lower amount of exhaust gas energy is not enough to power the larger, LP turbine, but it does provide enough energy to power the smaller, HP turbine. During operation, as the engine begins to increase speed, the HP turbine is operated by the lower energy exhaust gases, but after the engine reaches a certain speed, the HP turbine no longer provides enough boost pressure to have any effect on engine performance. When this occurs, the LP turbine begins to operate and generate the higher level of boost pressure that the HP turbine cannot generate. Increasing engine speed also increases the exhaust gas energy, which is necessary to operate the LP turbine.

One common problem with this type of method of turbocharging is a phenomenon called "turbo lag." Turbo lag refers to the moment in operation where the HP turbine stops having an effect on engine performance, and the LP turbine begins to have an effect on engine performance. Typically, the method for directing the exhaust gas from one turbine to the next is controlled by a valve. When the HP turbine is operating at maximum boost pressure, and no longer increases engine power, the valve will open. At this moment in operation, there is still not enough exhaust gas energy to operate the LP turbine. As the engine speed keeps increasing with acceleration, the exhaust gas energy increases to begin to cause the LP turbine to have an effect on engine performance. The time frame from which the valve opens, to the point where the LP turbine beings to have an effect on engine power is the period where turbo lag occurs. During this period, the driver of the vehicle will experience a reduction in engine power, while the LP turbine begins to operate. This condition is considered undesirable, and several forms of prior art have been developed to provide a smooth transition from the HP turbine to the LP turbine, thereby providing a smoother power increase to the engine.

Another common problem with two-stage turbochargers occurs at higher engine speed, when the HP turbine is not cut off from the air flow of the exhaust gas. During this condition, sometimes called "overspeed," the increased exhaust gas energy can cause the HP turbine to spin at speeds which may cause damage. Control valves of two-stage series turbocharger systems have been applied to modulate the amount of exhaust gas pressure flowing into the LP turbine. These valves typically have been used for closing off exhaust gas flow to the LP turbine thereby only allowing the exhaust gas to flow only to the HP turbine until the HP turbine is no longer effective, at which point the valve opens a pathway to allow air to flow to the LP turbine. This is beneficial in providing boost pressure at low engine speeds, but does not aid preventing overspeed of the HP turbine.

Accordingly, there exists a need for an improvement in transitioning from the HP turbine to the LP turbine in a two-stage turbocharger system, as well as an improvement in the prevention in overspeed in a HP turbine.

Due to both federal and state regulations, the emissions allowed to be released during operation of motorized vehicles today are limited. One way to control the emissions released by the vehicle is to include an air management arrangement including a bypass valve and an exhaust gas recirculation unit (EGR). Generally, EGR bypass valves are used to recirculate exhaust gas back to the intake manifold of the engine. During periods when the exhaust gas temperature and pressure is high, such as when the engine speed increases with acceleration, the bypass valve can direct the exhaust gas through one outlet port to the EGR cooler chamber. During periods of low exhaust temperature and pressure, the bypass valve can direct the exhaust gas through the bypass port bypassing the EGR cooler chamber and entering the remaining components of the exhaust system.

A common problem with bypass valves is that they do not provide a tight seal or barrier with the two outlet ports since the bypass valves do not articulate in response to all seal surface geometries which can change due to thermal expansion as well as build-up of oil, dirt, grim, and the like.

Accordingly, it is an object of the invention to provide an improved valve assembly having a valve unit used to fully restrict exhaust gas flow from passing through the selected cooler port or the selected bypass port. Moreover, it is an object of the invention to provide a method of assembling such an improved valve assembly.

### SUMMARY OF THE INVENTION

The present invention solves these objects by a valve assembly according to claim 1, and a method according to claim 8.

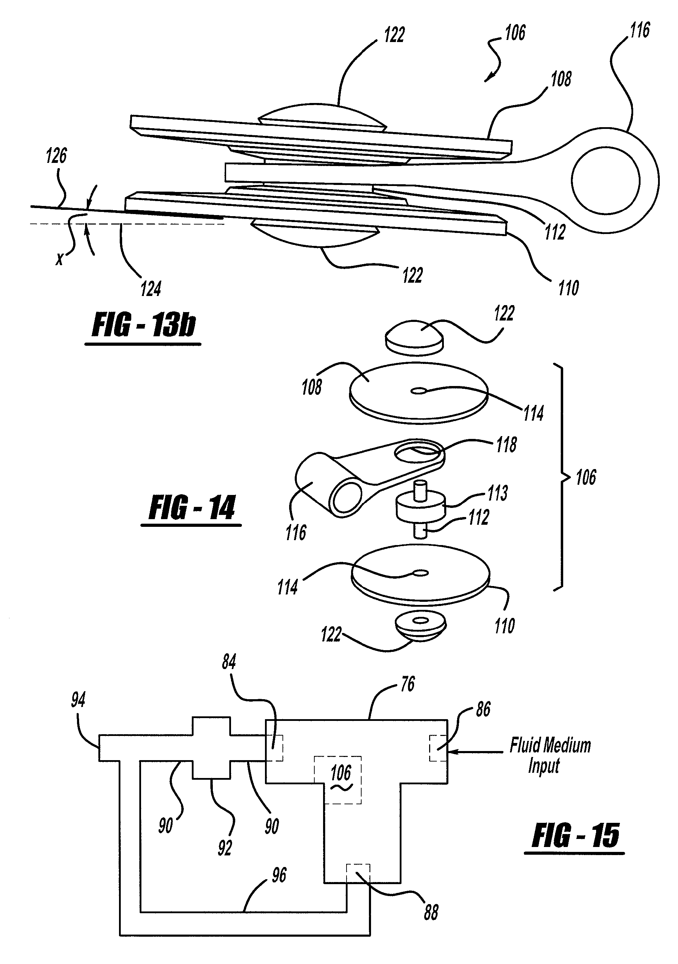

Further areas of applicability of the present invention will become apparent from the detailed description provided hereinafter. It should be understood that the detailed description and specific examples, while indicating the preferred embodiment of the invention according to Fig. 14, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a schematic view of a two-stage turbocharger unit having the present invention used in an engine with one exhaust bank;
Figure 2 is a schematic view of a two-stage turbocharger unit having the present invention used in an engine with two exhaust banks;
Figure 3 is a top view of a valve assembly portion;
Figure 4 is a bottom view of the valve assembly portion;
Figure 5 is a side view of the valve assembly portion;
Figure 6 is a cut-away side view of the valve assembly portion with the valve in a position to block off the exhaust gas inlet port;
Figure 7 is a cut-away side view of the valve assembly portion with the valve in a position to block off the HP turbine inlet port; and
Figure 8 is a cut-away side view of the valve assembly portion with the valve in an intermediate position.
Figure 9 is a perspective view of another valve assembly and showing an actuator;
Figure 10 is a side view of the valve assembly showing the valve member portion with a valve plate in a position to block off a bypass port and showing the rotation of the valve member in phantom, according to the alternative embodiment of the present invention;
Figure 11 is an exploded perspective view of the valve assembly;
Figure 12(a) is a perspective view of the valve member portion;
Figure 12(b) is a perspective view of the valve member portion;
Figure 13(a) is a perspective view of the valve member illustrating a second valve plate contacting a first plane associated with a second seating surface;
Figure 13(b) is a perspective view of the valve member illustrating the second valve plate articulating in response to a second plane associated with a second seating surface.
Figure 14 is an exploded view of an embodiment of the valve member portion having a pin flange, according to an embodiment of the present invention;
Figure 15 is a schematic diagram illustrating the valve assembly in fluid communication with a downstream path and a bypass path, according to an embodiment of the present invention;
Figure 16 is a schematic diagram illustrating articulation of the first and second valve plates, according to the present invention.

### DETAILED DESCRIPTION OF THE PREFERRED EMBODIMENTS

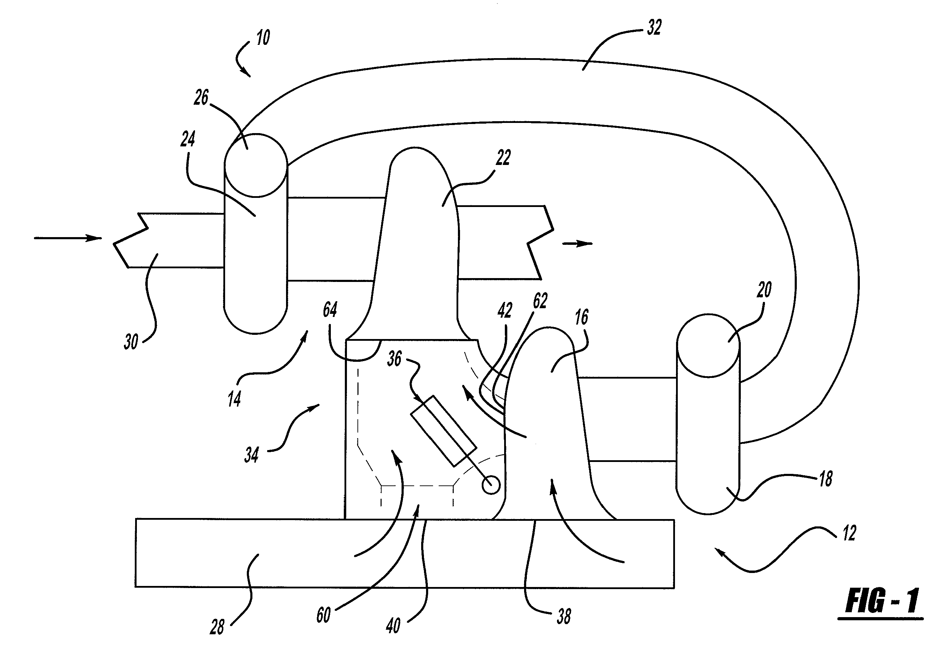

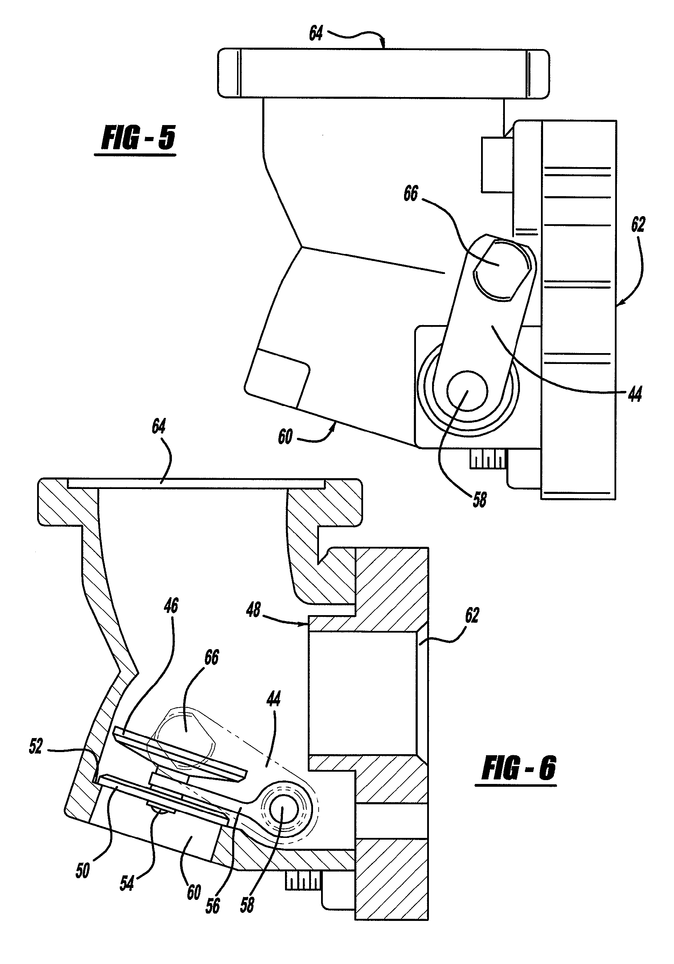

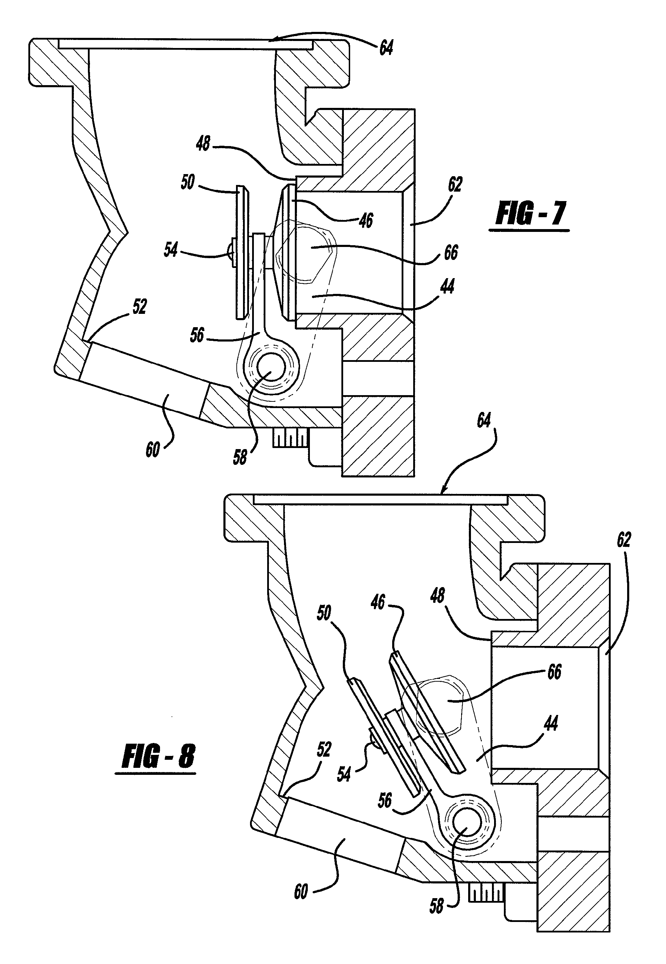

The following description of a preferred embodiment, as shown in Fig. 14, is merely exemplary in nature and is in no way intended to limit the invention, its application, or uses. The embodiments of Fig. 1 to 13 are not part of the invention.

Referring to Figure 1, a two-stage exhaust gas turbocharger unit is generally shown at 10, comprised of a high-pressure (HP) turbocharger unit 12, and a low-pressure (LP) turbocharger unit 14. The HP turbocharger unit 12 includes a HP turbine 16, and an HP compressor 18 having an outlet port 20. Similarly, the LP turbocharger unit 14 includes a LP turbine 22 and a LP compressor 24 having an outlet port 26. The LP turbine 22 is mounted on an exhaust manifold 28. The LP compressor 24 is connected to an intake line 30, which is connected at the center of LP compressor 24. An intake conduit 32 is connected to outlet port 26 on a first end, and is connected to the center of HP turbine 18 on a second end.

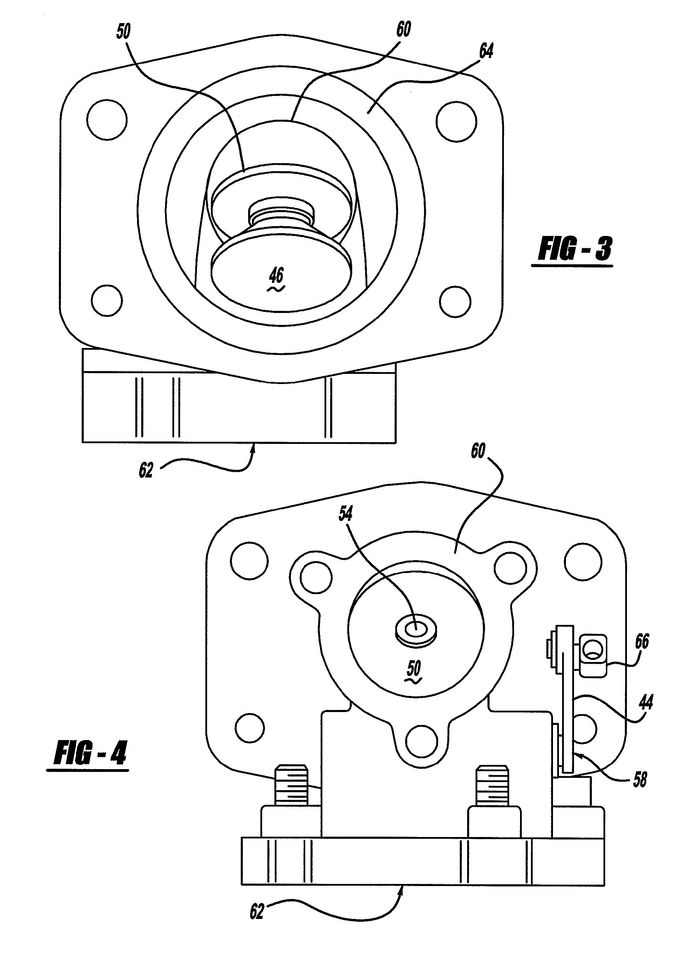

The HP turbine 16 and the LP turbine 22 are connected by a valve assembly 34 having a valve 36, shown in Figure 1, and in Figures 3-8. The valve assembly 34 is mounted on the exhaust manifold 28 and receives exhaust gases from either the second exhaust manifold outlet 40 or the HP turbine outlet 42. The valve assembly 34 is also comprised of a lever 44, a first valve plate 46 that works in conjunction with a first contact surface 48, and second valve plate 50 that works in conjunction with a second contact surface 52. The first valve plate 46 and the second valve plate 50 face in opposite directions of each other, and are connected by a pin 54, and are mounted onto a pivot arm 56. The pivot arm 56 is fixed for rotation upon a hinge assembly 58. The valve assembly 34 also includes an exhaust gas inlet port 60, an HP turbine inlet port 62, an LP turbine outlet port 64, and a rotatable connector 66. The rotatable connector 66 is connected to an actuator which can be hydraulic, pneumatic, or some other type of device controlled by the vehicle's electronic control unit.

The operation of the present invention configured for a single-bank exhaust system as shown in Figure 1 will now be described. During low engine speed operation, the valve 36 is used to close off the exhaust gas inlet port 60 when the vehicle is first beginning to accelerate, and exhaust gas pressure is low, forcing all of the exhaust gas through the HP turbine 16. When the valve 36 is configured in this manner, the exhaust gas flows from the exhaust manifold 28, through the first exhaust manifold outlet 38, through the HP turbine 16, through the HP turbine outlet 42, through the HP turbine inlet port 62 and into the valve assembly 34. The valve assembly 34 then directs the exhaust gas into the LP turbine 22, where it is then passed into the remaining components of the exhaust system. As all of the exhaust gas is being forced through the HP turbine 16, fresh air flows through the intake line 30, passing through the LP compressor 24, and through outlet port 26. The air then flows through the intake conduit 32, and into the HP compressor 18. The HP compressor 18 compresses the fresh air received from the intake conduit 32, and forces it into the intake manifold of the engine.

During the process where all of the exhaust gas is being directed toward the HP turbine, the LP compressor 24 is not activated because it is controlled by the LP turbine 22, which is also not activated. The LP turbine 22 is larger in size compared to the HP turbine 16, and the LP compressor 24 is larger than the HP compressor 18. Neither are activated during this process because at lower engine speeds the volume of exhaust gas flow is not high enough to activate the LP turbine 22, and the volume of fresh air flowing into the system is not high enough for LP compressor 24 to effectively compress it. Directing all of the exhaust gas flow into the smaller HP turbine 16 allows the HP compressor 18 to provide the necessary amount of compressed air to flow into the intake manifold of the engine, increasing engine power at low engine speeds.

As the engine speed increases and the vehicle accelerates, the smaller HP turbine 16 and HP compressor 18 become less and less effective. When the engine speed increases to a certain predetermined value, the vehicle's electronic control unit commands the actuator to open the valve 36, lifting the second valve plate 50 away from the second contact surface 52, allowing exhaust gas from the exhaust manifold 28 to flow through the second exhaust manifold outlet 40, through the exhaust gas inlet port 60, and then through the valve assembly 34. The exhaust gas then exits through the LP turbine outlet port 64 of the valve assembly 34 and flows into the LP turbine 22, the exhaust gas then flows into the remaining exhaust system components. As the LP turbine 22 is activated from the increased exhaust gas pressure, the LP compressor 24 will begin to compress air coming in from the intake line 30. The compressed air is then forced through the outlet port 26 and into the intake conduit 32, where it then flows through the HP compressor 18, through the outlet port 20, and into the intake manifold of the engine. During this portion of operation, the air coming into the HP compressor 18 has already been pressurized by the LP compressor 24.

As the engine speed continues to increase, the valve 36 continues to rotate further away from the exhaust gas inlet port 60, and moves closer to the HP turbine inlet port 62. When it becomes necessary to direct all of the exhaust gas to flow directly into the LP turbine 22, the valve 36 moves into a position where the first valve plate 46 comes in contact with the first contact surface 48. When the valve 36 is in this position, exhaust gas cannot flow from the HP turbine 16 into the valve assembly 34. All of the exhaust gas flows from the exhaust manifold 28, through the second exhaust manifold outlet 40, and into the valve assembly 34. The valve 36 can be controlled by an actuator, or some other device, connected to the rotatable connector 66, which rotates the lever 44, thereby rotating the valve 36.

When closing off the second exhaust manifold outlet 40 or the HP turbine outlet 42, the valve 36 provides a smooth transition from the exhaust gas flowing through the HP turbine 16 to the LP turbine 22, and can be moved to any position therebetween to direct the flow of exhaust gas as driving conditions mandate.

It should also be noted that another advantage of the present invention is the orientation of the valve assembly 34 in relation to the HP turbine 16 and the LP turbine 22. The valve 36 is located in a position where the flow of exhaust gas pushes on the valve 36 when the first valve plate 46 is pressed against the first contact surface 48 and when the second valve plate 50 is pressed against the second contact surface 52. This also occurs when the valve 36 is located in any position therebetween. Also, the hinge assembly 58 is located in a position between the HP turbine outlet 42, and the second exhaust manifold outlet 40. Locating the hinge assembly 58 in this position allows for a single valve to be used for directing exhaust gas flow to either the HP turbine 16 or the LP turbine 22. Also, the valve assembly 34 is not only used for directing exhaust gas flow to each of the turbines, but the valve assembly 34 can also stop the flow of exhaust gas into the HP turbine 16, preventing overspeed and damage. Additionally, locating the valve 36 in the aforementioned position allows for greater control of the exhaust gas flow than compared to, for example, if the valve 36 were positioned in front of the second exhaust manifold outlet 40 or in front of the HP turbine outlet 42.

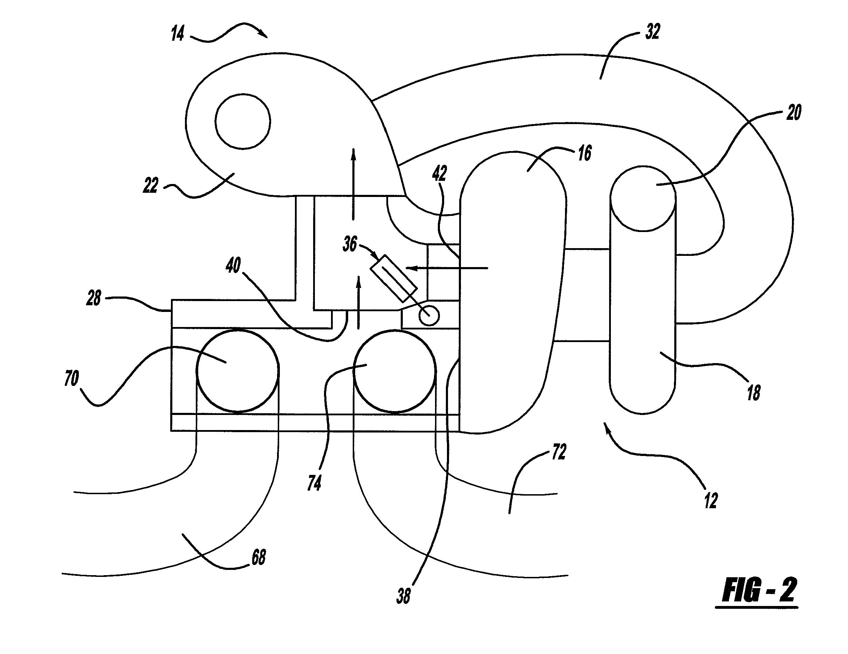

The present invention can also be used with engines having two exhaust banks, such as with a "V-6" or "V-8" engine. This embodiment is shown in Figure 2, and is similar to the embodiment shown in Figure 1, wherein like numbers refer to like elements. In addition, this embodiment also includes a first exhaust tube 68 connected to a first exhaust bank and a first opening 70, as well as a second exhaust tube 72 connected to a second exhaust bank and a second opening 74. In this embodiment, exhaust gas flows from the first exhaust tube 68 into the first opening 70, and from the second exhaust tube 72 into the second opening 74. The exhaust gas then flows into the exhaust manifold 28 where it is directed to flow into either the HP turbine 16 or the LP turbine 22 through the use of the valve assembly 34. The remaining operations of the HP turbocharger unit 12, the LP turbocharger unit 14 and the valve assembly 34 remain the same as mentioned in the previous embodiment.

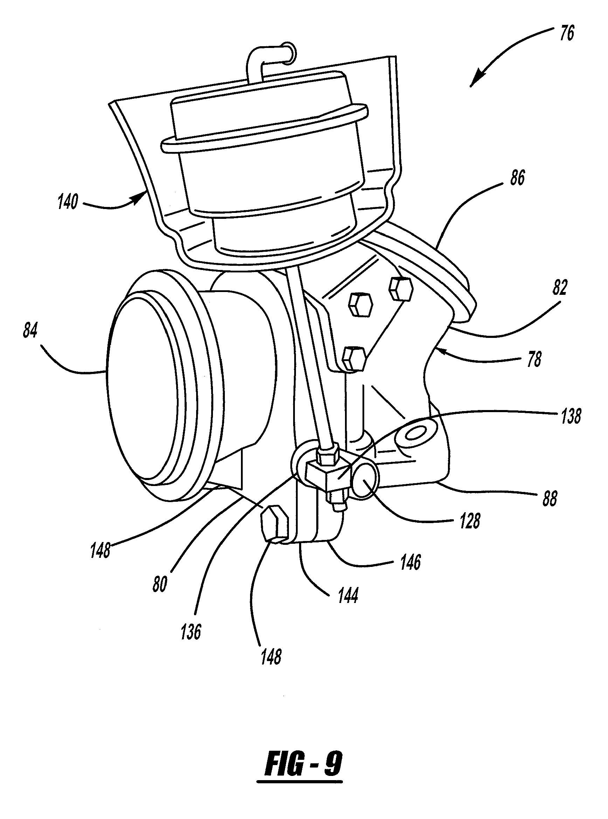

Referring generally to Figures 9-16, and more specifically to Figures 9-10 and 15, in an alternative embodiment a bypass valve assembly 76 is generally shown, having a valve housing 78 that includes a first housing 80 operably connected to a second housing 82. The first housing 80 includes an outlet port 84, and the second housing 82 includes an inlet port 86 operable to receive a fluid medium from a source and a bypass port 88 disposed between the inlet port 86 and the outlet port 84. The fluid medium, including an exhaust gas, oil, and the like, received by the inlet port 86 selectively passes either entirely through the outlet port 84, entirely through the bypass port 88, or through each simultaneously. As illustrated in the schematic of Figure 15, the outlet port 84 is in fluid communication with a downstream path 90, which receives and transports the fluid medium that passes through the outlet port 84. The downstream path 90 includes a structure 92 located at some distance between the bypass valve assembly 76 and an exit 94. The exit 94 can lead into an intake manifold, exhaust manifold, atmosphere, and the like. The structure 92 can be a turbocharger, a cooler, another bypass path, valve, and the like. The bypass port 88 is in fluid communication with a bypass path 96 which receives fluid medium passing through the bypass port 88. The bypass path 96 bypasses the fluid medium at least partly around the downstream path 90 to a location downstream from the structure 92. In operation, fluid medium received from the inlet port 86 is selectively directed to flow either through the bypass port 88 leading to the bypass path 96, thereby bypassing the structure 92, or through the outlet port 84 to the downstream path 90 that flows into the structure 92. It is understood that alternatively a percentage of fluid medium is selectively directed through the outlet port and inlet port simultaneously.

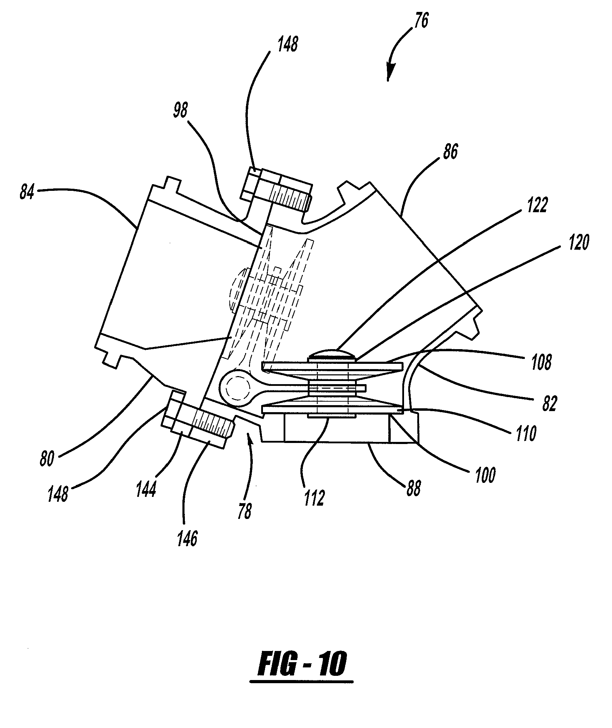

Referring generally to Figures 9-16, the valve housing 78 also includes a first seating surface 98 formed in the first housing 80 and a second seating surface 100 formed in the second housing 82. The first seating surface 98 defines an opening of the outlet port 84, and the second seating surface 100 defines a second opening of the bypass port 88. A valve member 106 is operably mounted inside the valve housing 78 and is operable to pivot from a first position relative to the outlet port 84, a second position relative to the bypass port 88 (illustrated in phantom in Figure 10), and intermediate positions therebetween. The valve member 106 includes a first valve plate 108 and a second valve plate 110 which face in substantially opposite directions from each other. The first and second valve plates 108,110 can articulate in response to the seating surface geometries of the first and second seating surface 98,100 respectively in order to create a tight seal or barrier for restricting the flow of the fluid medium.

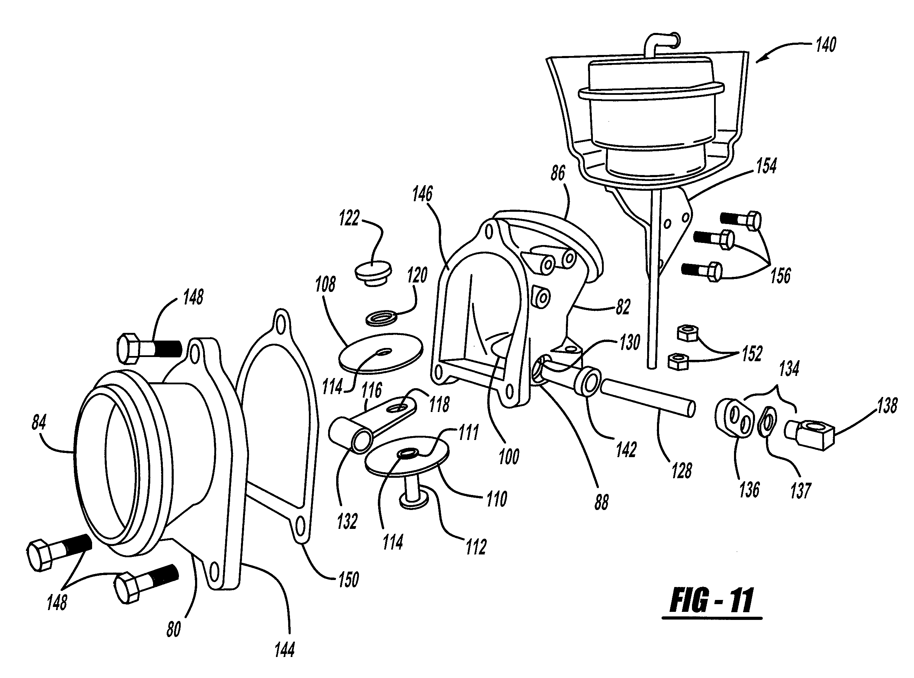

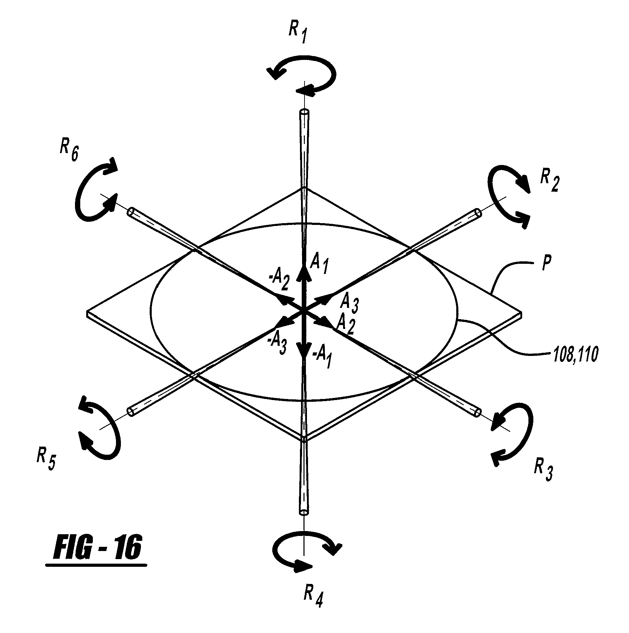

In further regard to Figures 11-14, and more particularly to Figures 11-12(a), a pivot arm 116 is disposed between the first and second valve plates 108,110. The first and second valve plates 108,110 are slidably connected to the pivot arm 116 and are operably coupled together by a pin 112 that is inserted through a centrally located aperture 114 disposed on both the first and second valve plates 108,110. Raised bosses 109,111 formed on the first and second valve plates 108,110 respectively are adapted to receive the pin 112 and are opposingly disposed in a pivot arm aperture 118 portion located at one end of the pivot arm 116. The pin 112 is disposed substantially perpendicular to a plane passing along the first and second seating surfaces 98,100 when the valve member 106 is pivoted to the first position and the second position respectively. The first and second valve plates 108,110 can rotate 360 degrees about the circumference of the pin 112 and can operably slide with respect to the longitudinal axis of the pin 112 to accommodate 360 degree pivoting of the first and second valve plates 108,110 about the circumference of the pin 112. By way of non-limiting example, Figure 16 illustrates an example of articulation of the first and second valve plates 108,110 in a radial, axial, and multi-axis-angular direction, wherein a circle representing the first and second valve plates 108,110 is shown articulating relative to a fixed plane, p. Lines A1, -A1, A2, -A2, A3, and -A3 represent three axes that the first and second valve plates 108,110 can move along. R1 through R6 represent six axes about which the first and second valve plates 108,110 can rotate.

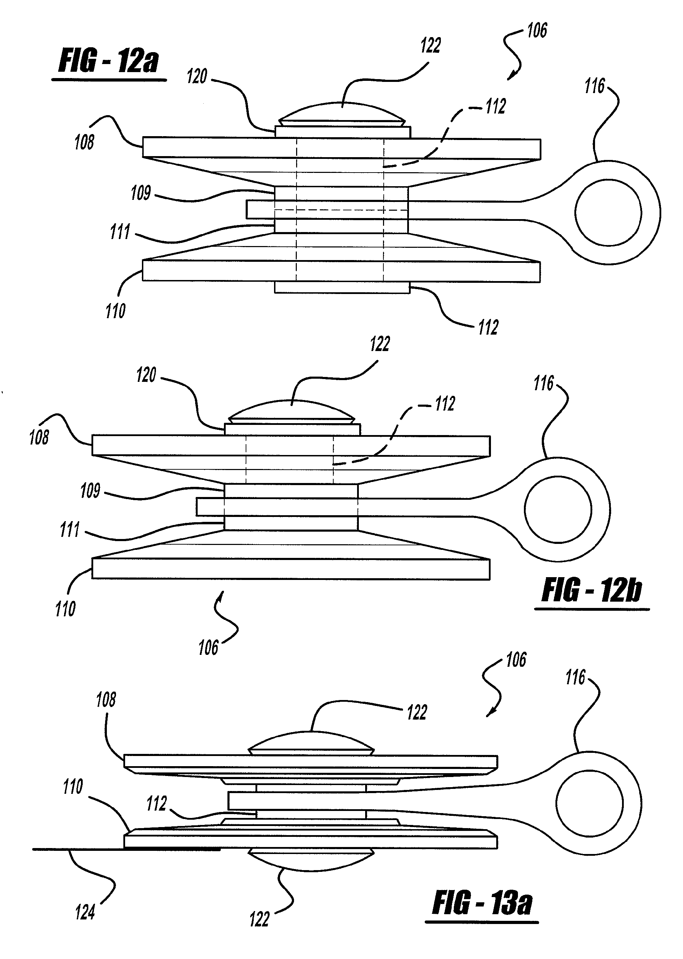

The pin 112 can have one wider end that prevents the first or second valve plate 108,110 from sliding off of the pin 112. To prevent the opposing first or second valve plate 108,110 from sliding off of the pin 112, an optional washer 120 is followed by an end cap 122 disposed at the opposite end of the pin 112. It is understood that alternatively the first and second valve plates 108,110 can be secured by eliminating the optional washer 120 and forming or machining an end cap 122 on at least one of the ends of the pin 112. It is further understood that the raised bosses 109,111 can alternatively be a single piece formed on either the first or second valve plate 108,110 and also integrally formed with the pin 112. See Figure 12(b). Figure 12(b) illustrates pin 112 and bosses 109,111 formed as an integral portion of the second valve plate 110. As shown, the raised bosses 109,111 of the second valve plate 110 are at least partly disposed within pivot arm aperture 118 and pin 112 is disposed through the aperture 114 of the first valve plate 108.

It is understood that alternatively, as shown in Figures 13(a)-(b), the raised bosses 109,111 can be omitted such that the pin 112 is disposed through the apertures 114 of the first and second valve plates 108,110 and the pivot arm aperture 118 associated with one end of the pivot arm 116. Preferably, both end caps 122 are formed on the pin 112 and no optional washer 120 is used. In an embodiment of the invention shown in Figure 14, the pin 112 has a pin flange 113 formed on the pin 112 wherein the pin flange 113 of the pin 112 has a greater diameter than the remainder of the pin 112 and can slide with respect to the pivot arm aperture 118. The pin flange 113 is at least partly disposed in the pivot arm aperture 118 portion located at one end of the pivot arm 116 and the rest of the pin 112 extends through the apertures 114 of both the first and second valve plates 108,110 respectively.

The slidable connection of the first and second valve plates 108,110 allows the valve plates 108,110 to slide relative to the pivot arm 116 so that a space or gap is selectively formed between the pivot arm 116 and the first valve plate 108, or space is created between the pivot arm 116 and the second valve plate 110. The space accommodates radial movement and articulation of the first and second valve plates 108,110 such that the first valve plate 108 can move relative to any geometry of the first seating surface 98 of the outlet port 84, and the second valve plate 110 can move relative to any geometry of the second seating surface 100 of the bypass port 88, thereby allowing the first and second valve plate 108,110 to selectively close off the fluid medium from passing through either the outlet port 84 or the bypass port 88 respectively. It is understood that the slidable connection also forms a radial gap or clearance between flange 113 and the pivot arm 116 and aperture 118. The slidable connection and rotatability of the first and second valve plates 108,110 about the circumference of the pin 112 accommodates radial movement, axial movement, and multi-axis-angular movement to compensate for any radial, axial, and multi-axis-angular misalignment, relative to any seating geometry to selectively create a tight seal or barrier for restricting the flow of the fluid medium. Since a change in the geometry of the first or second seating surface 98,100 can occur due to ware, thermal expansion, or build up of foreign matter, including oil, dirt, grim, and dust this articulation feature allows the first and second valve plate 108,110 to move in response to any geometry. It is understood that the valve member 106 can also be pivoted to an intermediate position such that the fluid medium can be variably directed through the outlet port 84 and bypass port 88 simultaneously, with the percentage of fluid medium passing through each port being dependent on the position of the valve member 106. It is further understood that when the bosses 109,111 are formed on the first and second valve plates 108,110, the bosses 109,111 slide with respect to the pivot arm 116.

Figures 13(a) and 13(b) show an example of the articulation of the second valve plate 110 in response to any geometry of the second seating surface 100. Referring to Figure 13(a), line 124 illustrates a first plane passing along the second seating surface 100, and the second valve plate 110 prior to articulation. Referring to Figure 13(b), line 126 illustrates a second plane passing along the second seating surface 100 having a change in geometry, and the second valve plate 110 during an articulating movement. As shown, line 126 is at a different angle, x, than line 124. For example, x may be ten degrees and may reflect the amount of articulation and movement of the second valve plate 110, first valve plate 108, pin 112, and pivot arm 116 in response to the geometry of the second seating surface 100.

Referring to Figures 9-15, a shaft 128 extends through a passage 130 of the valve housing 78 and into a cylindrical tube 132 formed as part of the pivot arm 116 and disposed at an end of the pivot arm 116. The shaft 128 and cylindrical tube 132 are in press fit engagement to ensure that pivot arm 116 pivots with the shaft 128. A portion of the shaft 128 remains outside of the valve housing 78 to operably connect the shaft 128 to a lever assembly 134. The lever assembly 134 has a lever 136, washer 137, and lever pivot 138. The lever 136 is adapted on one end to receive the shaft 128 and is adapted on the other end to receive the lever pivot 138. The lever pivot 138 is adapted to receive an actuator 140. An optional bushing 142 can also be used in the passage 130 and receives the shaft 128 to further facilitate rotation of the shaft 128 in the passage 130. The actuator 140 can be an electric, hydraulic, pneumatic, and combinations thereof.

The first housing 80 can be operably connected to the second housing 82 by aligning a first flange 144 of the first housing 80 with a second flange 146 (shown in Figure 11) of the second housing 82 and using a plurality of bolts 148 and the like to operably connect the first flange 144 to the second flange 146. The first flange 144 at least partly surrounds an opening in the housing that is not an opening of the outlet port 84. The second flange 146 at least partly surrounds an opening that is not an opening of the inlet port 86 or bypass port 88. It is understood that alternatively the first housing 80 and second housing 82 can be welded together, glued together, and the like.

In operation, when the engine operation is at a predetermined condition, the vehicle's electronic control unit can command the actuator 140, or some other device, to rotate the valve member 106 to a first position relative to the outlet port 84 or a second position relative to the bypass port 88. The actuator 140 controls the valve member 106 by commanding rotation of the lever assembly 134 and the shaft 128, which pivots the pivot arm 116. When it becomes necessary to direct all of the fluid medium through the bypass port 88, the valve member 106 is rotated into a position where the first valve plate 108 articulates in response to the first seating surface 98 of the outlet port 84, thereby restricting substantially all of the fluid medium from entering the outlet port 84 and allowing the fluid medium to flow through the bypass port 88. When it becomes necessary to direct all of the fluid medium through the outlet port 84, the valve member 106 rotates into a position where the second valve plate 110 articulates in response with the second seating surface 100 of the bypass port 88, thereby restricting substantially all of the fluid medium from entering the bypass port 88 and allowing the fluid medium to flow through the outlet port 84. It is further understood that the actuator 140 can control the valve member 106 to move to any position between the outlet port 84 and bypass port 88 to distribute the fluid medium therebetween. As illustrated in Figure 15, when the fluid medium is directed through the outlet port 84 it can flow through a downstream path 90 to an operably connected structure 92 before exiting the downstream path 90. As further illustrated, when the fluid medium is directed through the bypass port 88 it can flow through an operably connected bypass path 96 that bypasses the structure 92.

In another embodiment, the method of assembling the bypass valve assembly 76 includes providing the first housing 80, the second housing 82, the valve member 106, the lever assembly 134, and the actuator 140. The first housing 80 comprises the outlet port 84 and a first flange 144 at least partly surrounding an opening that is not an opening associated with the outlet port 84. The second housing 82 has the inlet port 86, the bypass port 88, the passage 130, and the second flange 146 that at least partly surrounds an opening that is not an opening associated with the inlet port 86, bypass port 88, or passage 30. Assembling the valve member 106 includes at least partly inserting the raised bosses 109,111 of the respective first and second valve plate 108,110 into the pivot arm aperture portion 118. The pin 112 is then inserted through the second valve plate 110 aperture 114, the raised bosses 109,111, and the first valve plate 108 aperture 114. The end cap 122 is then either operably connecting or formed on both ends of the pin 112. If the optional washer is used 120, the pin 112 is inserted through the washer 120 before operably connecting or forming the end cap 122 on the pin 112.

The valve member 106 is then inserted through the opening defined by the second flange 146 and placed inside the second housing 82 at a location that allows the valve member 106 to pivot between a first position and a second position such that the second valve plate 110 can align with the bypass port 88 and the first valve plate 108 can align with the outlet port 84. The shaft 128 is then inserted through the passage 130 disposed within the second housing 82 and into the cylindrical tube 132 of the pivot arm 116, and the other end of the shaft 128 is left outside of the second housing 82 for connecting to the lever assembly 134. If the optional bushing 142 is used, the bushing 142 is inserted in the passage 130 prior to inserting the shaft 128. One end of the lever 136 of the lever assembly 134 is operably connected to the shaft 128, and the other end of the lever 136 is operably connected to the lever pivot 138 and washer 137.

The first flange 144 of the first housing 80 is operably connected to the second flange 146 of the second housing 82 by a plurality of bolts 148 and the like such that the first flange 144 is aligned with the second flange 146. Alternatively, a gasket 150, which can be adapted to receive the plurality of bolts 148, can be placed between the first flange 144 and the second flange 146 before connecting the first housing 80 to the second housing 82. It is understood that the first housing 80 and second housing 82 can alternatively be welded together, glued together, and the like.

The actuator 140 is operably connected to the lever pivot 138 by a plurality of locking nuts 152, bolts, and the like. For added stability of the actuator 140, an attachment bracket 154 can be disposed on the actuator 140 and connected to the valve housing 78 by a plurality of actuator bolts 156.

The description of the invention is merely exemplary in nature and, thus, variations that do not depart from the gist of the invention are intended to be within the scope of the invention. Such variations are not to be regarded as a departure from the spirit and scope of the invention.

## Claims

1. A valve assembly (70), comprising:
- a valve housing (78);
- a first port (86) formed in said valve housing (78);
- a second port (84) formed in said valve housing (78);
- a third port (88) formed in said housing (78);
- said first, second and third ports (86, 84, 88) being operable to receive or deliver a fluid medium flow;
- a valve member (106) operably connected to said valve housing (78) for controlling a fluid medium flow associated with two of the three ports (86, 84, 88), said valve member (106) including a first valve plate (108) and a second valve plate (110) facing in substantially opposite directions from each other, wherein said first valve plate (108) articulates in radial, axial, and multi-axis angular directions to selectively form a tight barrier with one of said ports to block the fluid medium flow through said port and said second valve plate (110) articulates in radial, axial, and multi-axis-angular directions to selectively form a tight barrier with another of said ports to block the fluid medium flow through said port, or said valve member (106) pivots to distribute the fluid medium flow therebetween, wherein said valve member (106) further comprises a pin (112) slidably connected to a pivot arm (116) wherein said pin (112) slides with respect to said pivot arm (116) to allow said first valve plate (108) and said second valve plate (110) to articulate, **characterized in that**
- said pin (112) has a pin flange (113) formed on the pin (112) wherein the pin flange (113) of the pin (112) has a greater diameter than the remainder of the pin (112) and can slide with respect to a pivot arm aperture (118).

2. The valve assembly according to claim 1, wherein said valve housing (78) is a two piece valve housing having a first portion (80) operably connected to a second portion (82), wherein a first flange of said first portion (80) is aligned with a second flange of said second portion (82).

3. The valve assembly according to claim 1 wherein said pin flange (113) is at least partly disposed in the pivot arm aperture (118) located at one end of the pivot arm (116) and a rest of the pin (112) extends through apertures (114) of both the first and second valve plates (108, 110) respectively.

4. The valve assembly (70) according to claim 1 further comprising an actuator (140) operably connected to said valve member (36), wherein said actuator (140) is selected from the group consisting of an electric actuator, a hydraulic actuator, a pneumatic actuator, and combinations thereof.

5. The valve assembly (70) of claim 1 further comprising:
- a first seating surface (98) formed around an opening on one of said ports;
- a second seating surface (100) formed around an opening of another of said ports, wherein said first seating surface (98) and said second seating surface (100) each have a seating surface geometry and said first valve plate (108) and said second valve plate (110) articulate to accommodate for the seating surface geometries.

6. The valve assembly (70) according to claim 1, further comprising a first seating surface (98) and a second seating surface (100) formed in said valve housing (78), wherein said first and second valve plates (108, 110) articulate to selectively form a tight barrier with said first and second seating surfaces (98, 100) to selectively block the fluid medium flow associated with two of the three ports.

7. The valve assembly (70) according to claim 1, wherein said valve member (106) is operably connected to said valve housing (78) by inserting said valve member (106) through an opening defined by a flange.

8. A method of assembling a valve assembly comprising:
- providing a first housing (80) comprising a first port (84) and an opening defined by a first flange (144);
- providing a second housing (82) comprising a second port (86), third port (88), a passage (130), and an opening defined by a second flange (146);
- providing a first valve plate (108), a second valve plate (110), a pivot arm (116) including a first end operable to receive a shaft (128), and a pin (112);
- assembling a valve member (106) by slidably connecting said pivot arm (116) to said first and second valve plates (108, 110) disposed in substantially opposite directions and inserting a pin (112) through an aperture (114) of at least one of said first or second valve plates (108, 110);
- inserting said valve member (106) through said opening defined by said second flange (146);
- locating said valve member (106) in a position to pivot between said first port (84), and one of said second (86) or third ports (88), and any position therebetween;
- inserting said shaft (128) partly through said passage (130) and rotatably connecting said shaft (128) to said first end of said pivot arm (116);
- providing a lever assembly (134) including a lever (136), washer (137), and a lever pivot (138), wherein said lever (136) is operably connected to said shaft (128);
- operably connecting said first housing (80) to said second housing (82), wherein said flange (144) of said first housing (80) is aligned with said second flange (146) of said second housing (82); and
- providing an actuator (140) operably connected to said lever assembly (134), said actuator (140) manipulating said lever assembly (134) to rotate said shaft (128), wherein said valve member (106) pivots to a first position for restricting a fluid medium from flowing through said first port (84), or said valve member (106) pivots to a second position for restricting said fluid medium from flowing through said second (86) or third port (88) or pivots to any position therebetween, **characterized in**
- forming a pin flange (113) on a pin (112) and providing said pin flange (113) with a greater diameter than the remainder of the pin (112) and slidably disposing said pin flange (113) with respect to a pivot arm aperture (118).

9. The method of assembling a valve assembly according to claim 8, further comprising, inserting a bushing (142) through said passage (130), inserting said shaft (128) through said bushing (142), and rotatably connecting said shaft (128) to said pivot arm (116), wherein said shaft (128) rotates to pivot said pivot arm (116) for pivoting said valve member (106) to said first port (84), said second (86) or third port (88), and any position therebetween.

10. The method of assembling a valve assembly according to claim 8 further comprising, providing a gasket seal (150) operably connected to said flange (144) and said second flange (146).

## Patentansprüche

1. Ventilbaugruppe (70), umfassend:
- ein Ventilgehäuse (78);
- einen ersten Anschluss (86), der in dem Ventilgehäuse (78) ausgebildet ist;
- einen zweiten Anschluss (84), der in dem Ventilgehäuse (78) ausgebildet ist;
- einen dritten Anschluss (88), der in dem Ventilgehäuse (78) ausgebildet ist;
- wobei der erste, zweite und dritte Anschluss (86, 84, 88) betrieben werden können, um einen Fluidmedienstrom aufzunehmen oder abzugeben;
- ein Ventilelement (106), das betriebswirksam mit dem Ventilgehäuse (78) zum Steuern eines Fluidmedienstroms verbunden ist, das mit zwei der drei Anschlüsse (86, 84, 88) verknüpft ist, wobei das Ventilelement (106) eine erste Ventilplatte (108) und eine zweite Ventilplatte (110) aufweist, die in im Wesentlichen entgegengesetzte Richtungen voneinander weisen, wobei die erste Ventilplatte (108) in radialen, axialen und Mehrachsen-Winkelrichtungen abgewinkelt ist, um selektiv eine dichte Barriere mit einem der Anschlüsse zu bilden, um die Fluidmedienströmung durch den Anschluss zu blockieren, und wobei die zweite Ventilplatte (110) in radialen, axialen, und Mehrachsen-Winkelrichtungen abgewinkelt ist, um selektiv eine dichte Barriere mit einem anderen der Anschlüsse zu bilden, um die Fluidmedienströmung durch den Anschluss zu blockieren, oder wobei das Ventilelement (106) zum Verteilen der Fluidmedienströmung dazwischen schwenkt, wobei das Ventilelement (106) ferner einen Stift (112) umfasst, der verschiebbar mit einem Schwenkarm (116) verbunden ist, wobei der Stift (112) in Bezug auf den Schwenkarm (116) gleitet, damit die erste Ventilplatte (108) und die zweite Ventilplatte (110) ein Gelenk bilden können, **dadurch gekennzeichnet, dass**
- der Stift (112) einen Stiftflansch (113) aufweist, der an dem Stift (112) ausgebildet ist, wobei der Stiftflansch (113) des Stiftes (112) einen größeren Durchmesser als der Rest des Stiftes (112) aufweist und in Bezug auf eine Schwenkarmöffnung (118) gleiten kann.

2. Ventilbaugruppe nach Anspruch 1, wobei das Ventilgehäuse (78) ein zweiteiliges Ventilgehäuse ist, das einen ersten Abschnitt (80), der betriebswirksam mit einem zweiten Abschnitt (82) verbunden ist, aufweist, wobei ein erster Flansch des ersten Abschnitts (80) mit einem zweiten Flansch des zweiten Abschnitts (82) ausgerichtet ist.

3. Ventilbaugruppe nach Anspruch 1, wobei der Stiftflansch (113) mindestens teilweise in der Schwenkarmöffnung (118) angeordnet ist, die sich an einem Ende des Schwenkarms (116) befindet, und sich ein Rest des Stiftes (112) durch die Öffnungen (114) der ersten und der zweiten Ventilplatte (108, 110) erstreckt.

4. Ventilbaugruppe (70) nach Anspruch 1, ferner umfassend eine Betätigungsvorrichtung (140), die betriebswirksam mit dem Ventilelement (36) verbunden ist, wobei die Betätigungsvorrichtung (140) aus der Gruppe, bestehend aus einer elektrischen Betätigungsvorrichtung, einer hydraulischen Betätigungsvorrichtung, einer pneumatischen Betätigungsvorrichtung und Kombinationen davon ausgewählt ist.

5. Ventilbaugruppe (70) nach Anspruch 1, ferner umfassend:
- eine erste Sitzfläche (98), die um eine Öffnung an einem der Anschlüsse ausgebildet ist;
- eine zweite Sitzfläche (100), die um eine Öffnung eines anderen der Anschlüsse ausgebildet ist, wobei die erste Sitzfläche (98) und die zweite Sitzfläche (100) jeweils eine Sitzflächengeometrie aufweisen und die erste Ventilplatte (108) und die zweite Ventilplatte (110) ein Gelenk bilden, um die Sitzflächengeometrien aufzunehmen.

6. Ventilbaugruppe (70) nach Anspruch 1, ferner umfassend eine erste Sitzfläche (98) und eine zweite Sitzfläche (100), die in dem Ventilgehäuse (78) ausgebildet sind, wobei die erste und die zweite Ventilplatte (108, 110) ein Gelenk bilden, um selektiv eine dichte Barriere mit der ersten und der zweiten Sitzfläche (98, 100) zum selektiven Blockieren der Fluidmedienströmung zu bilden, die mit zwei der drei Anschlüsse verknüpft sind.

7. Ventilbaugruppe (70) nach Anspruch 1, wobei das Ventilelement (106) betriebswirksam mit dem Ventilgehäuse (78) durch Einführen des Ventilelements (106) durch eine Öffnung, die von einem Flansch definiert wird, verbunden ist.

8. Verfahren zur Montage einer Ventilbaugruppe, umfassend:
- Bereitstellen eines ersten Gehäuses (80), das einen ersten Anschluss (84) und eine Öffnung umfasst, die von einem ersten Flansch (144) definiert wird;
- Bereitstellen eines zweiten Gehäuses (82), das einen zweiten Anschluss (86), einen dritten Anschluss (88), einen Kanal (130) und eine Öffnung umfasst, die von einem zweiten Flansch (146) definiert wird;
- Bereitstellen einer ersten Ventilplatte (108), einer zweiten Ventilplatte (110), eines Schwenkarms (116), die ein erstes Ende, das betrieben werden kann, um eine Welle (128) aufzunehmen, und einen Stift (112) aufweisen;
- Montieren eines Ventilelements (106) durch verschiebbares Verbinden des Schwenkarms (116) mit der ersten und zweiten Ventilplatte (108, 110), die im Wesentlichen in entgegengesetzten Richtungen angeordnet sind und Einführen eines Stifts (112) durch eine Öffnung (114) mindestens der ersten oder zweiten Ventilplatte (108, 110);
- Einführen des Ventilelements (106) durch die Öffnung, die von dem zweiten Flansch (146) definiert wird;
- Anordnen des Ventilelements (106) in einer Position zum Schwenken zwischen dem ersten Anschluss (84) und entweder dem zweiten (86) oder dritten Anschluss (88) und jeder Position dazwischen;
- Einführen der Welle (128) teilweise durch den Kanal (130) und drehbares Verbinden der Welle (128) an dem ersten Ende des Schwenkarms (116);
- Bereitstellen einer Hebelanordnung (134) mit einem Hebel (136), einem Abstandsstück (137) und einem Hebelgelenk (138), wobei der Hebel (136) betriebswirksam mit der Welle (128) verbunden ist;
- betriebswirksames Verbinden des ersten Gehäuses (80) mit dem zweiten Gehäuse (82),
wobei der Flansch (144) des ersten Gehäuses (80) mit dem zweiten Flansch (146) des zweiten Gehäuses (82) ausgerichtet ist; und
- Bereitstellen einer Betätigungsvorrichtung (140), die betriebswirksam mit der Hebelanordnung (134) verbunden ist, wobei die Betätigungsvorrichtung (140) auf die Hebelanordnung (134) einwirkt, um die Welle (128) zu drehen, wobei das Ventilelement (106) zu einer ersten Position schwenkt, um Fluidmedium daran zu hindern, durch den ersten Anschluss (84) zu strömen, oder wobei das Ventilelement (106) zu einer zweiten Position schwenkt, um das Fluidmedium daran zu hindern, durch den zweiten (86) oder dritten Anschluss (88) zu strömen, oder zu jeder beliebigen Position dazwischen schwenkt, **gekennzeichnet durch**
- Bilden eines Stiftflansches (113) an einem Stift (112) und Bereitstellen des Stiftflansches (113) mit einem größeren Durchmesser als der Rest des Stiftes (112), und **durch** verschiebbares Anordnen des Stiftflansches (113) in Bezug auf eine Schwenkarmöffnung (118).

9. Verfahren zur Montage einer Ventilbaugruppe nach Anspruch 8, ferner umfassend das Einführen einer Buchse (142) durch den Kanal (130), Einführen der Welle (128) durch die Buchse (142) und drehbares Verbinden der Welle (128) am Schwenkarm (116), wobei die Welle (128) dreht, um den Schwenkarm (116) zum Schwenken des Ventilelements (106) zum ersten Anschluss (84), zum zweiten (86) oder dritten Anschluss (88) und zu jeder beliebigen Position dazwischen zu schwenken.

10. Verfahren zur Montage einer Ventilbaugruppe nach Anspruch 8, ferner umfassend das Bereitstellen einer Dichtung (150), die betriebswirksam mit dem Flansch (144) und dem zweiten Flansch (146) verbunden ist.

## Revendications

1. Ensemble soupape (70), comprenant :
- un carter de soupape (78) ;
- un premier orifice (86) formé dans ledit carter de soupape (78) ;
- un second orifice (84) formé dans ledit carter de soupape (78) ;
- un troisième orifice (88) formé dans ledit carter (78) ;
- lesdits premier, second et troisième orifices (86, 84, 88) pouvant être actionnés pour recevoir ou distribuer un flux d'agent fluide ;
- un élément de soupape (106) relié en fonctionnement audit carter de soupape (78) pour commander un flux d'agent fluide associé à deux des trois orifices (86, 84, 88), ledit élément de soupape (106) comprenant une première plaque de soupape (108) et une seconde plaque de soupape (110) se faisant face dans des directions sensiblement opposées l'une par rapport à l'autre, dans lequel ladite première plaque de soupape (108) s'articule dans les directions radiales, axiales et angulaires multiaxiales pour former de manière sélective une barrière étanche avec un desdits orifices pour bloquer le flux d'agent fluide à travers ledit orifice et ladite seconde plaque de soupape (110) s'articule dans les directions radiales, axiales et angulaires multiaxiales pour former de manière sélective une barrière étanche avec un autre desdits orifices pour bloquer le flux d'agent fluide à travers ledit orifice, ou ledit élément de soupape (106) pivote pour distribuer le flux d'agent fluide entre, dans lequel ledit élément de soupape (106) comprend en outre une broche (112) connectée de façon coulissante à un bras de pivotement (116), dans lequel ladite broche (112) coulisse par rapport audit bras de pivotement (116) pour permettre à ladite première plaque de soupape (108) et à ladite seconde plaque de soupape (110) de s'articuler, **caractérisé en ce que** :
- ladite broche (112) a une bride de broche (113) formée sur la broche (112), la bride de broche (113) de la broche (112) ayant un diamètre supérieur au restant de la broche (112) et pouvant coulisser par rapport une ouverture de bras de pivotement (118).

2. Ensemble soupape selon la revendication 1, dans lequel ledit carter de soupape (78) est un carter de soupape en deux pièces ayant une première partie (80) reliée en fonctionnement à une seconde partie (82), dans lequel une première bride de ladite première partie (80) est alignée avec une seconde bride de ladite seconde partie (82).

3. Ensemble soupape selon la revendication 1, dans lequel ladite bride de broche (113) est au moins en partie disposée dans l'ouverture de bras de pivotement (118) positionné à une extrémité du bras de pivotement (116) et le restant de la broche (112) s'étend à travers les ouvertures (114) des deux première et seconde plaques de soupape (108, 110), respectivement.

4. Ensemble soupape (70) selon la revendication 1, comprenant en outre un actionneur (140) relié en fonctionnement audit élément de soupape (36), dans lequel ledit actionneur (140) est sélectionné dans le groupe constitué par un actionneur électrique, un actionneur hydraulique, un actionneur pneumatique et des combinaisons de ceux-ci.

5. Ensemble soupape (70) selon la revendication 1, comprenant en outre :
- une première surface d'assise (98) formée autour d'une ouverture sur un desdits orifices ;
- une seconde surface d'assise (100) formée autour d'une ouverture des autres desdits orifices, dans lequel ladite première surface d'assise (98) et ladite seconde surface d'assise (100) ont chacune une géométrie de surface d'assise et ladite première plaque de soupape (108) et ladite seconde plaque de soupape (110) s'articulent pour loger les géométries de surface d'assise.

6. Ensemble soupape (70) selon la revendication 1, comprenant en outre une première surface d'assise (98) et une seconde surface d'assise (100) formées dans ledit carter de soupape (78), dans lequel lesdites première et seconde plaques de soupape (108, 110) s'articulent pour former de manière sélective une barrière étanche avec lesdites première et seconde surfaces d'assise (98, 100) pour bloquer de manière sélective le flux d'agent fluide associé à deux des trois orifices.

7. Ensemble soupape (70) selon la revendication 1, dans lequel ledit élément de soupape (106) est relié en fonctionnement audit carter de soupape (78) en insérant ledit élément de soupape (106) à travers une ouverture définie par une bride.

8. Procédé d'assemblage d'un ensemble soupape comprenant :
- la mise à disposition d'un premier carter (80) comprenant un premier orifice (84) et une ouverture définie par une première bride (144) ;
- la mise à disposition d'un second carter (82) comprenant un second orifice (86), un troisième orifice (88), un passage (130) et une ouverture définie par une seconde bride (146) ;
- la mise à disposition d'une première plaque de soupape (108), d'une seconde plaque de soupape (110), d'un bras de pivotement (116) comprenant une première extrémité pouvant être actionnée pour recevoir un arbre (128) et une broche (112) ;
- l'assemblage d'un élément de soupape (106) par connexion coulissante dudit bras de pivotement (116) auxdites première et seconde plaques de soupape (108, 110) disposées dans des directions sensiblement opposées et l'insertion d'une broche (112) à travers une ouverture (114) d'au moins une desdites première ou seconde plaques de soupape (108, 110) ;
- l'insertion dudit élément de soupape (106) à travers ladite ouverture définie par ladite seconde bride (146) ;
- le positionnement dudit élément de soupape (106) dans une position pour pivoter entre ledit premier orifice (84), et un orifice parmi lesdits second (86) ou troisième orifices (88) et n'importe quelle position intermédiaire ;
- l'insertion dudit arbre (128) en partie à travers ledit passage (130) et la connexion pivotante dudit arbre (128) à ladite première extrémité dudit bras de pivotement (116) ;
- la mise à disposition d'un ensemble levier (134) comprenant un levier (136), une rondelle (137) et un pivot de levier (138), dans lequel ledit levier (136) est relié en fonctionnement audit arbre (128) ;
- la connexion en fonctionnement dudit premier carter (80) audit second carter (82), dans lequel ladite bride (144) dudit premier carter (80) est alignée avec ladite seconde bride (146) dudit second carter (82) ; et
- la mise à disposition d'un actionneur (140) relié en fonctionnement audit ensemble levier (134), ledit actionneur (140) manipulant ledit ensemble levier (134) pour faire pivoter ledit arbre (128), dans lequel ledit élément de soupape (106) pivote vers une première position pour restreindre un agent fluide s'écoulant à travers ledit premier orifice (84) ou dans lequel ledit élément de soupape (106) pivote vers une seconde position pour restreindre ledit agent fluide s'écoulant à travers ledit second (86) ou troisième orifice (88) ou pivote vers n'importe quelle position intermédiaire, **caractérisé par** :
- la formation d'une bride de broche (113) sur une broche (112) et la mise à disposition de ladite bride de broche (113) avec un diamètre supérieur au restant de la broche (112) et la disposition coulissante de ladite bride de broche (113) par rapport à une ouverture de bras de pivotement (118).

9. Procédé d'assemblage d'un ensemble soupape selon la revendication 8, comprenant en outre l'insertion d'un raccord (142) à travers ledit passage (130), l'insertion dudit arbre (128) à travers ledit raccord (142) et la connexion pivotante dudit arbre (128) audit bras de pivotement (116), dans lequel ledit arbre (128) tourne pour faire pivoter ledit bras de pivotement (116) afin de faire pivoter ledit élément de soupape (106) vers ledit premier orifice (84), ledit second (86) ou troisième orifice (88) et n'importe quelle position intermédiaire.

10. Procédé d'assemblage d'un ensemble soupape selon la revendication 8, comprenant en outre la mise à disposition d'un joint d'étanchéité (150) relié en fonctionnement à ladite bride (144) et à ladite seconde bride (146).
